# EUROPÄISCHE PATENTANMELDUNG

(11) **EP 1 700 542 A1**
(43) Veröffentlichungstag der Anmeldung: **13.09.2006**
(21) Anmeldenummer: 06110897.3
(22) Anmeldetag: 09.03.2006
(51) Int. Cl.: A47C 7/38, B60N 2/48

(54) **Sitzmöbel**

(30) Priorität: 11.03.2005 DE 202005003961 U
(71) Anmelder: FERDINAND LUSCH GMBH & CO. KG., D-33649 Bielefeld (DE)
(72) Erfinder:
(74) Vertreter: Dantz, Jan Henning

(57) **Zusammenfassung**

Ein Sitzmöbel umfasst eine an einer Rückenlehne (1) motorisch verschwenkbar angeordnete Kopfstütze (2), wobei die Kopfstütze (2) über einen Seilzug (8) mit dem vorzugsweise im Lendenbereich der Rückenlehne (1) angeordneten Motor (9) verbunden ist. Durch den Einsatz eines Seilzuges (8) anstelle einer starren Spindel, kann ein anderer Motor (9) als Antrieb eingesetzt werden, vorzugsweise ein Schneckengetriebemotor (9), der besonders flach aufbaut.

## Beschreibung

Die vorliegende Erfindung betrifft ein Sitzmöbel gemäß dem Oberbegriff des Anspruchs 1.

Zur Verstellung bzw. Verschwenkung der Kopfstütze eines solchen Sitzmöbels kommt üblicherweise ein Spindelantrieb zum Einsatz, bestehend aus einem elektrischen Motor und einer Gewindespindel, die an der Kopfstütze angekoppelt ist und die in Verbindung mit einer Spindelmutter bei Betätigung des Motors die Kopfstütze verschwenkt. Dabei greift die Spindel an einen Hebel der Kopfstütze an, so dass bei entsprechender Hubbewegung der Spindel die Kopfstütze um eine Drehachse geschwenkt wird. Ein solches Sitzmöbel ist aus der DE 203 08 124 U1 bekannt.

Ein solcher Spindelantrieb steht allerdings einer optimierten Gestaltung bzw. Herstellung entgegen. Bauartigbedingt ist für den Spindelantrieb ein relativ großer Raum zur Unterbringung erforderlich, so dass die Installation innerhalb der Rückenlehne nur möglich ist, wenn eine bestimmte Mindestdicke der Rückenlehne nicht unterschritten wird.

Naturgemäß ist dadurch die gestalterische Freiheit bei der Konzeption eines solchen Sitzmöbels eingeschränkt, zumal Forderungen dahin gehen, optisch leichtere Sitzmöbel zu kreieren, wozu eine Verschlankung der Rückenlehne quasi zwangsnotwendig ist.

Neben dieser bauartbedingten Einschränkung des Gestaltungsfreiraums ist als weiterer Nachteil der bekannten Konstruktion der verhältnismäßig hohe Preis des Spindelantriebs zu beklagen, der einer kostengünstigen Herstellung entgegensteht.

Der vorliegenden Erfindung liegt die Aufgabe zugrunde, ein Sitzmöbel der gattungsgemäßen Art so weiter zu entwickeln, dass es kostengünstiger herstellbar und eine weitgehend ungehinderte Formgebung möglich ist.

Diese Aufgabe wird durch ein Sitzmöbel gelöst, das die Merkmale des Anspruchs 1 aufweist.

Durch den Einsatz eines Seilzuges anstelle einer starren Spindel, kann ein anderer Motor als Antrieb eingesetzt werden, vorzugsweise ein Schneckengetriebemotor, der besonders flach aufbaut. Weitere bislang erforderliche Antriebsteile, wie Spindelmuttern oder dergleichen sind nicht mehr erforderlich, so dass der neue Antrieb nicht mehr das Bauteil darstellt, an dem sich die Dimensionierung der Rückenlehne, insbesondere deren Dicke, orientieren muss.

Dies führt zu einer Gestaltungsmöglichkeit, die sich ausschließlich an der gewünschten Formgebung orientiert, was naturgemäß eine bemerkenswerte Verbesserung gegenüber dem Stand der Technik darstellt.

Nach einer vorteilhaften Weiterbildung der Erfindung erfolgt die Verschwenkung der Kopfstütze in eine abgewinkelte Stellung gegen die Kraft einer Feder, vorzugsweise einer Schenkelfeder, die einerseits an einem Rahmenteil der Rückenlehne und andererseits an der Kopfstütze angeschlossen ist und die für eine Rückstellung der Kopfstütze in eine gestreckte Lage sorgt, wenn der Motor entsprechend betätigt wird.

Der Seilzug selbst ist an einer Umlenkrolle befestigt, die beispielsweise an einem Seitenteil der Kopfstütze oder auf einer Koppelstange, vorzugsweise einer Vierkantwelle verdrehsicher gehalten ist, die zwei Seitenteile der Kopfstütze miteinander verbindet und eine Drehachse bildet.

Zur Begrenzung des Verschwenkweges ist zumindest eines der Seitenteile der Kopfstütze mit einem Anschlag versehen, der in den beiden Endstellungen jeweils an einer Nase anliegt, die Bestandteil des zugeordneten Seitenholms der Rückenlehne und deren Abstand zueinander den Schwenkwinkel der Kopfstütze begrenzen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teil eines erfindungsgemäßen Sitzmöbels in einer perspektivischen Ansicht
- Figur 2: den Teil nach Figur 1 in einer weiteren Gebrauchsstellung, ebenfalls in einer perspektivischen Ansicht
- Figuren 3 bis 5: ein Teil eines weiteren Ausführungsbeispieles des Sitzmöbels in unterschiedlichen Gebrauchsstellungen in perspektivischer Ansicht

In den Figuren ist ein Teil eines Sitzmöbels dargestellt und zwar eine Rückenlehne 1 und eine daran angeordnete, motorisch verschwenkbare Kopfstütze 2.

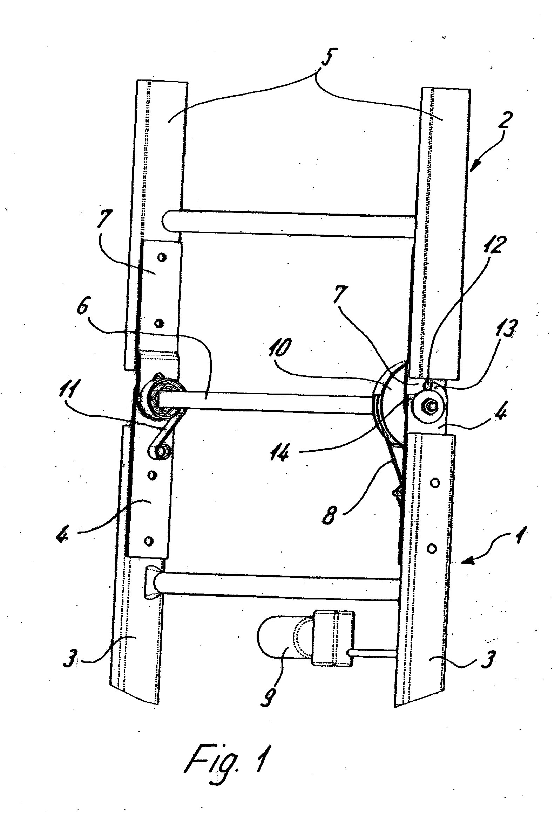

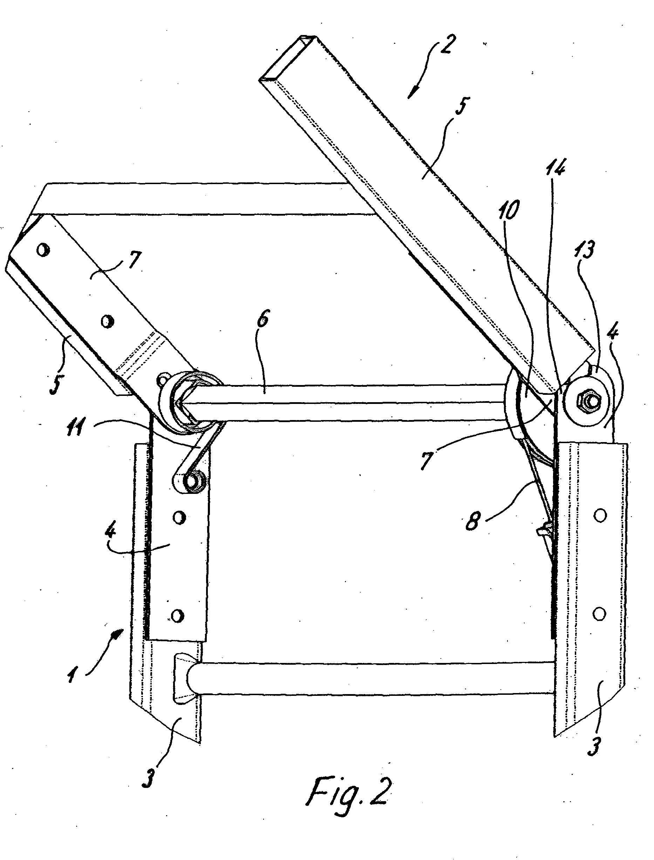

Bei dem in den Figuren 1 und 2 gezeigten Beispiel sind die Kopfstütze 2 und die Rückenlehne 1 über eine als Drehachse fungierende Vierkantwelle 6 miteinander verbunden, wobei die Vierkantwelle 6 drehsicher in Verbindungslaschen 7 gelagert ist, die an Seitenteilen 5 der Kopfstütze 2 befestigt sind.

Endseitig ist die Vierkantwelle 6 drehbar in Anschlusslaschen 4 angeordnet, die fest mit Seitenholmen 3 der Rückenlehne 1 verbunden sind.

An einem Ende ist auf der Vierkantwelle 6 verdrehfest eine Umlenkrolle 10 gelagert, an der ein Seilzug 8 befestigt ist, der wiederum mit einem Motor 9, vorzugsweise einem Schneckengetriebemotor verbunden ist, wie er beispielsweise als Scheibenwischermotor für Kraftfahrzeuge Verwendung findet. Dieser Motor 9 ist über ein nicht dargestelltes Bedienelement auslösbar.

An der der Umlenkrolle 10 gegenüber liegenden Verbindungslasche 7 ist eine Schenkelfeder 11 befestigt, deren einer Schenkel an der zugeordneten Anschlusslasche 4 der Rückenlehne 1 gehalten ist. Bei einer Verschwenkung der Kopfstütze 2 aus einer gestreckten Position, entsprechend der Figur 1 in eine abgewinkelte Stellung, gemäß der Figur 2 wird der Seilzug 8 in Richtung des Motors 9 gezogen unter Verdrehung der Vierkantwelle 6 und damit unter Verschwenkung der Kopfstütze 2. Dabei wird die Schenkelfeder 11 gespannt.

Für eine Rückstellung der Kopfstütze 2 in eine gestreckte Lage wird der Motor entsprechend betätigt, so dass durch die Federkraft der Schenkelfeder 11 die Kopfstütze zurückgeschwenkt wird unter Mitnahme des entriegelten Seilzuges 8.

Zumindest an einer der Verbindungslaschen 7 ist ein Anschlag 12 in Form eines Zapfens befestigt, der in jeder Endlage an einer Nase 13, 14 anliegt, die an der zugeordneten Anschlusslasche 4 der Rückenlehne 1 vorgesehen sind. Der Abstand der Nasen 13, 14 zueinander begrenzen den Schwenkwinkel, um den die Kopfstütze 2 verschwenkbar ist.

Insbesondere in den Figuren 1, 3 und 4 ist sehr deutlich erkennbar, dass der Motor 9 so klein, insbesondere flach dimensioniert ist, dass er ohne weiteres in dem zwischen den Seitenholmen 3 vorgegeben Raum platzierbar ist ohne vorder- oder rückseitig herauszuragen.

Die Verwendung des Seilzuges 8 als Antriebsglied erlaubt prinzipiell die Unterbringung des Motors 9 an jedem beliebigen Ort, soweit dies sinnvoll und durch die Flexibilität des Seilzuges 8 möglich ist. Die Dimensionierung bzw. Gestaltung des Sitzmöbels ist somit nicht mehr abhängig von dem Antrieb.

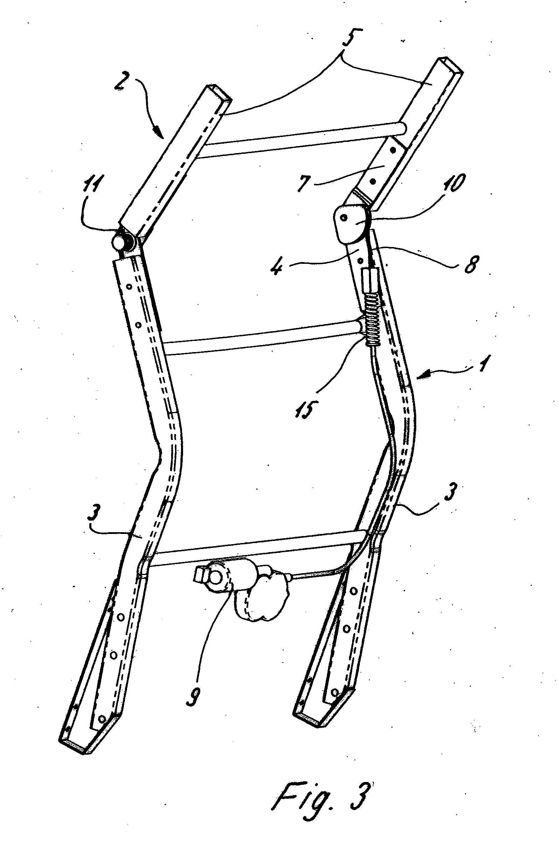

In den Figuren 3 bis 5 ist eine weitere Variante der Erfindung dargestellt, bei der auf die Vierkantwelle 6 verzichtet ist. Hier ist die Umlenkrolle 10 direkt an einem Seitenteil 5 bzw. einer Verbindungslasche 7 der Kopfstütze 2 verdrehsicher befestigt.

Des weiteren ist in den Seilzug 8 ein Federglied 15 integriert, durch das bei zu hoher Belastung der Kopfstütze 2 ein Längenausgleich des Seilzuges 8 erfolgt und eine Beschädigung des Motors 9 bzw. des angeschlossenen Getriebes vermieden wird.

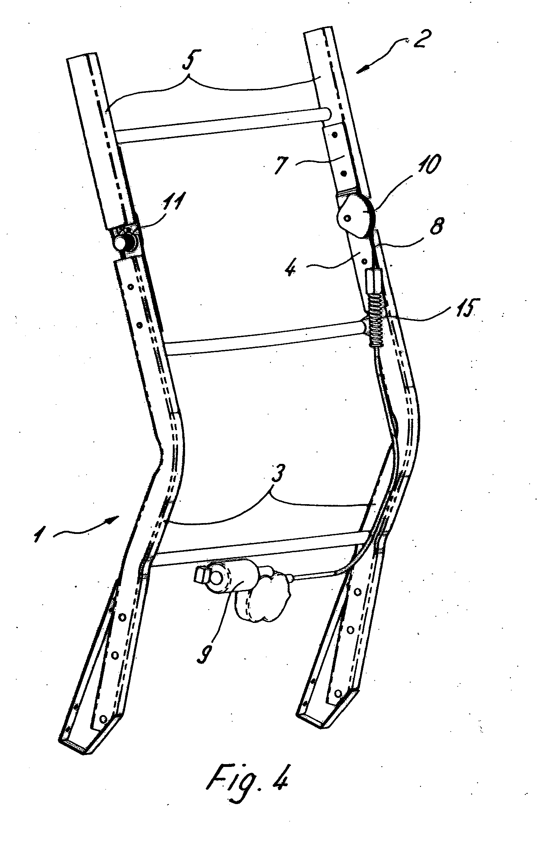

Das Federglied 15, vorzugsweise in Form einer Druck- oder Zugfeder, ist so dimensioniert, dass sie zum Verschwenken der Kopfstütze von einer gestreckten Position (Figur 4) in eine verschwenkte Position (Figur 3) als starres Bauteil fungiert, das erst, wie erwähnt, bei einer auf die Kopfstütze 2 wirkenden Überlast entsprechend gestreckt wird.

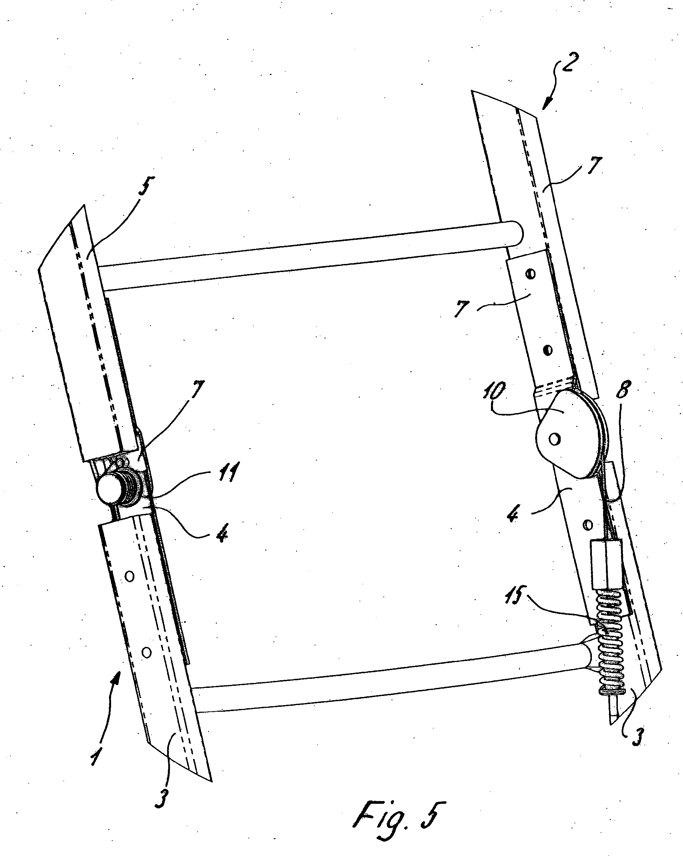

Die Figur 5 zeigt im übrigen eine vergrößerte Darstellung des Verbindungsbereiches zwischen der Kopfstütze 2 und der Rückenlehne 1 entsprechend der in der Figur 4 gezeigten gestreckten Gebrauchsposition.

### Bezusszeichenliste

- 1: Rückenlehne
- 2: Kopfstütze
- 3: Seitenholm
- 4: Anschlusslasche
- 5: Seitenteil
- 6: Vierkantwelle
- 7: Verbindungslasche
- 8: Seilzug
- 9: Motor
- 10: Umlenkrolle
- 11: Schenkelfeder
- 12: Anschlag
- 13: Nase
- 14: Nase
- 15: Federglied

## Patentansprüche

1. Sitzmöbel, mit einer an einer Rückenlehne (1) motorisch verschwenkbar angeordneten Kopfstütze (2), **dadurch gekennzeichnet, dass** die Kopfstütze (2) über einen Seilzug (8) mit dem vorzugsweise im Lendenbereich der Rückenlehne (1) angeordneten Motor verbunden ist.

2. Sitzmöbel nach Anspruch 1, **dadurch gekennzeichnet, dass** der Seilzug (8) an einer verdrehsicher mit der Kopfstütze (2) verbundenen Umlenkrolle (10) befestigt ist.

3. Sitzmöbel nach Anspruch 1 oder 2, **dadurch gekennzeichnet, dass** die Umlenkrolle an einem Seitenteil (5) oder einer Verbindungslasche (7) der Kopfstütze (2) befestigt ist.

4. Sitzmöbel nach einem der vorhergehenden Ansprüche, **dadurch gekennzeichnet, dass** die Umlenkrolle (10) verdrehfest auf einer Koppelstange gelagert ist.

5. Sitzmöbel nach einem der vorhergehenden Ansprüche, **dadurch gekennzeichnet, dass** die Koppelstange als Vierkantwelle (6) ausgebildet ist.

6. Sitzmöbel nach einem der vorhergehenden Ansprüche, **dadurch gekennzeichnet, dass** die Kopfstütze (2) aus einer gestreckten Lage gegen die Kraft einer Feder in eine abgewinkelte Stellung verschwenkbar ist.

7. Sitzmöbel nach einem der vorhergehenden Ansprüche, **dadurch gekennzeichnet, dass** die Feder als Schenkelfeder ausgebildet ist, die sowohl mit der Kopfstütze (2) wie auch mit der Rückenlehne (1) verbunden ist.

8. Sitzmöbel nach einem der vorhergehenden Ansprüche, **dadurch gekennzeichnet, dass** die Kopfstütze (2) einen Anschlag (12) aufweist, der in den jeweiligen Endstellungen der Kopfstütze (2) an angeformten Nasen (13, 14) einer Anschlusslasche (4) der Rückenlehne (1) anliegt.

9. Sitzmöbel nach einem der vorhergehenden Ansprüche, **dadurch gekennzeichnet, dass** der Motor (9) als Schneckengetriebemotor ausgebildet ist.

10. Sitzmöbel nach einem der vorhergehenden Ansprüche, **dadurch gekennzeichnet, dass** die Vierkantwelle (6) verdrehsicher mit der Kopfstütze (2) und drehbar mit der Rückenlehne (1) verbunden ist.

11. Sitzmöbel nach einem der vorhergehenden Ansprüche, **dadurch gekennzeichnet, dass** der Seilzug (8) mit einer Überlastsicherung versehen ist.

12. Sitzmöbel nach einem der vorhergehenden Ansprüche, **dadurch gekennzeichnet, dass** die Überlastsicherung aus einem Federglied (15) besteht, das in den Seilzug (6) integriert ist.

13. Sitzmöbel nach einem der vorhergehenden Ansprüche, **dadurch gekennzeichnet, dass** das Federglied (15) als Druck- oder Zugfeder ausgebildet ist, durch die bei Überlast der Seilzug (8) in seiner Länge veränderbar ist.
